Europäisches Patentamt

European Patent Office

Office européen des brevets

(19)

(11) Publication number: **0 040 499**
**B1**

(12) **EUROPEAN PATENT SPECIFICATION**

(45) Date of publication of patent specification: **27.12.84**

(51) Int. Cl.³: **C 04 B 35/10, H 01 J 61/30**

(21) Application number: **81302046.8**

(22) Date of filing: **08.05.81**

(54) **Polycrystalline translucent alumina sintered body, a method of producing the same, and a high pressure vapour discharge lamp obtained by using such a sintered body.**

(30) Priority: **15.05.80 JP 63312/80**

(43) Date of publication of application:
**25.11.81 Bulletin 81/47**

(45) Publication of the grant of the patent:
**27.12.84 Bulletin 84/52**

(84) Designated Contracting States:
**DE FR GB NL**

(56) References cited:
**GB-A-2 022 564**
**US-A-3 792 142**
**US-A-4 182 972**

(73) Proprietor: **NGK INSULATORS, LTD.**
**2-56, Suda-cho, Mizuho-ku**
**Nagoya-shi, Aichi 467 (JP)**

(72) Inventor: **Kaneno, Masayuki**
**77-1, Aza-Otsuhachiman**
**Kabaike Tokoname City (JP)**
Inventor: **Kajihara, Takehiro**
**675-45, Ohaza-Futaebori**
**Komaki City (JP)**

(74) Representative: **Whalley, Kevin et al**
**Marks & Clerk 57/60 Lincoln's Inn Fields**
**London WC2A 3LS (GB)**

Courier Press, Leamington Spa, England.

## Description

The present invention relates to a polycrystalline translucent alumina sintered body having an excellent in-line transmission, a method of producing the same, and a high pressure vapour discharge lamp obtained by using such an alumina sintered body.

Polycrystalline translucent alumina has excellent light transmission, heat resistance, and corrosion resistance, so that such alumina sintered bodies have been widely used for envelopes of high pressure vapour discharge lamps, windows for high temperatures, and memory erasing windows.

As a method for producing polycrystalline translucent alumina, it has been known to add about 0.1% of MgO to fine alumina powder of high purity as an additive to control exaggerated grain growth of alumina crystal grains, whereby a dense polycrystalline translucent alumina sintered body having substantially no pores may be produced; however, this method has the defect that firing at a temperature of higher than 1,800°C is necessary to obtain a sintered body having an excellent transmission. A process wherein about 0.05—0.1% of each $Y_2O_3$ and $La_2O_3$ is added as an additive in addition to MgO has been disclosed, but even though the firing temperature is lowered to 1,650—1,750°C owing to the function of $Y_2O_3$ and $La_2O_3$, the effects of these additives upon the grain growth of alumins particles are different, so that alumina crystal grains in the obtained sintered body are apt to be grown non-uniformly depending upon the ratio of MgO, $La_2O_3$ and $Y_2O_3$ added and therefore it is not possible to avoid degrading the mechanical strength and the thermal shock resistance. Furthermore, since the amounts of MgO, $La_2O_3$, $Y_2O_3$ added are large, different phases are formed in the crystal grain boundaries and the in-line transmission is very poor and there are many defects.

U.K. Specification No. GB—A—2 022 564 and U.S. Specification No. US—A—3 792 142 relate to translucent alumina and, as additives, and product of the Specification GB—A—2 022 564 contains MgO, $La_2O_3$ and $Y_2O_3$ each in an amount of 0.01—0.2%, and the product of the Specification US—A—3 792 142 contains 0.01—0.1% of MgO, 0.05—0.5% of $La_2O_3$ and 0.05—0.5% of $Y_2O_3$. However, the products of these two prior specifications are found to have poor in-line transmission values, due to the additives forming different phases at the grain boundaries, as described above.

The present invention in one aspect provides a polycrystalline translucent alumina sintered body which contains MgO, $La_2O_3$ and $Y_2O_3$ wherein the content of each of MgO, $La_2O_3$ and $Y_2O_3$ is 0.001—0.05% by weight, wherein the weight ratio of MgO/$La_2O_3$+$Y_2O_3$ is 0.5:1 to 2:1, and wherein the in-line transmission is more than 40%, the in-line transmission being measured on a polished sample having a cross-sectional area of 10×10 mm and a thickness of 0.5 mm at a wavelength of 600 nm.

The invention in another aspect provides a high pressure vapour discharge lamp having an envelope of polycrystalline translucent alumina which contains MgO, $La_2O_3$ and $Y_2O_3$, wherein the content of each of MgO, $La_2O_3$ and $Y_2O_3$ is 0.001—0.05% by weight, wherein the weight ratio of MgO/$La_2O_3$+$Y_2O_3$ is 0.5:1 to 2:1, and wherein the in-line transmission is more than 40% the in-line transmission being measured on a polished sample having a cross-sectional area of 10×10 mm and a thickness of 0.5 mm at a wavelength of 600 nm.

The invention in a further aspect provides a method of producing a polycrystalline translucent alumina sintered body, comprising adding to alumina powder having a purity of more than 99.8% MgO or a compound forming MgO in an amount of 0.01—0.1% by weight calculated as MgO, $La_2O_3$ or a compound forming $La_2O_3$ in an amount of 0.001—0.05% by weight calculated as $La_2O_3$, and $Y_2O_3$ or a compound forming $Y_2O_3$ in an amount of 0.001—0.05% by weight calculated as $Y_2O_3$, thoroughly mixing the resulting mixture, shaping the mixture into a desired form and firing the shaped article under vacuum or either an atmosphere of hydrogen gas or dissociated ammonia gas under an oxygen concentration of $10^{-15}$—$10^{-25}$ atm. ($10^{-10}$—$10^{-20}$ Pa).

Hereinafter "%" means "% by weight".

In the present invention, since MgO, $La_2O_3$ and $Y_2O_3$ coexist as additives, the firing can be carried out at a temperature as low as 1,650—1,850°C, and since the content of each additive is as low as 0.001—0.05% and the additives are present in a specific defined ratio, a second phase is not substantially formed in the alumina grain boundaries, so that translucent alumina having excellent transmission, mechanical strength and thermal shock resistance can be obtained.

A polycrystalline alumina sintered body according to the present invention can be suitably produced by the following steps. To $\gamma$-alumina powder having a purity of more than 99.8% and a grain size of 0.01—0.1 $\mu$m are added MgO or a compound forming MgO in an amount of 0.01—0.1% calculated as MgO, $La_2O_3$ or a compound forming $La_2O_3$ in an amount of 0.001—0.05% calculated as $La_2O_3$, and $Y_2O_3$ or a compound forming $Y_2O_3$ in an amount of 0.001—0.05% calculated as $Y_2O_3$, and the resulting mixture is mixed by a wet process in a ball mill for more than 10 hours and then taken out from the ball mill and dried and calcined at a temperature of 1,150—1,250°C for 3—7 hours in air. As the alumina starting material, use may be made of $\alpha$-alumina having a purity of more than 99.8% and a grain size of 0.1—0.5 $\mu$m instead of $\gamma$-alumina, and in this case the calcining step is not necessary. To the calcined powder is added homogeneously 1—3% of polyvinyl alcohol as a binder and the mixture is moulded under a hydraulic pressure of 5—30 kg/mm² into a desired shape. The thus shaped article is maintained at about 700°C for about one hour in air to burn and remove the binder and then fired under vacuum or either an atmosphere of hydrogen gas or dissociated ammonia gas and under an oxygen concentration of $10^{-15}$—$10^{-25}$ atm. ($10^{-10}$—$10^{-20}$ Pa). The firing is preferably carried out in two steps, and the primary firing is carried out by maintaining a temperature of 1,300—1,500°C for 2—5 hours or by gradually raising the temperature at a rate of 25°C/hr within the temperature range of 1,300—1,500°C, and then the secondary firing is carried out by maintaining a temperature of 1,650—1,850°C for more than one hour.

The thus obtained polycrystalline alumina sintered body contains 0.001—0.05% of MgO, 0.001—0.05% of $La_2O_3$ and 0.001—0.05% of $Y_2O_3$ and has a weight ratio of $MgO/La_2O_3+Y_2O_3$ of 0.5:1 to 2:1, an in-line transmission of more than 40% and an excellent mechanical strength. It is preferable that the content of each of $La_2O_3$ and $Y_2O_3$ is 0.001—0.01%. When the amount of one of MgO, $La_2O_3$ and $Y_2O_3$ in the sintered body is less than 0.001%, it is difficult to uniformly disperse the additive, so that the effect of the additive for uniformly causing densification and grain growth is not developed. Furthermore, when one of MgO, $La_2O_3$ and $Y_2O_3$ present in the sintered body is more than 0.05%, a second phase is formed and the transmission, particularly the in-line transmission, is reduced due to scattering of light.

When the weight ratio of $MgO/La_2O_3+Y_2O_3$ is outside the range of 0.5:1 to 2:1, as mentioned above the additives having different activity affecting the grain growth of the alumina grains are non-uniformly dispersed, so that alumina grains grow non-uniformly and therefore the grain size in the sintered body is apt to become uneven and the mechanical strength and the thermal shock resistance are lower. When the oxygen concentration in the sintering atmosphere is higher than $10^{-15}$ atm. ($10^{-10}$ Pa), oxygen atoms become caught in pores in the sintered body and their removal is difficult, so that a dense sintered body is not obtained and therefore the transmission is reduced. When the oxygen concentration is lower than $10^{-25}$ atm. ($10^{-20}$ Pa), $Al_2O_3$ is reduced to form lower oxides, such as AlO, and alumina is readily volatilized. Accordingly, the oxygen concentration in the firing temperature must be within the range of $10^{-15}$—$10^{-25}$ atm. ($10^{-10}$—$10^{-20}$ Pa).

In the present invention by the in-line transmission there is meant the ratio of intensity of the transmitted light to the incident light when light of a wavelength of 600 nm is entered by using a double beam-type spectrophotometer with respect to a sample having a cross-sectional area of 10×10 mm and a thickness of 0.5 mm, which has been obtained by polishing the sintered body.

The in-line transmission and grain size of polycrystalline translucent alumina sintered bodies of the present invention and the lamp efficiency when the sintered body is used as an envelope for a 400 W high pressure sodium lamp are shown in the following table. For comparison, the properties of alumina sintered bodies outside the scope of the present invention are also shown in the table.

TABLE

| Sample No. | | Amount of additives in sintered body (wt%) | | | Weight ratio MgO/(La₂O₃+Y₂O₃) | In-line transmission mission (%) | Grain size (μm) | | Bending strength (kg/mm²) | Lamp efficiency (Lm/W) |
|---|---|---|---|---|---|---|---|---|---|---|
| | | MgO | La$_2$O$_3$ | Y$_2$O$_3$ | | | Average grain size | Grain size distribution | | |
| Present invention | 1 | 0.001 | 0.001 | 0.001 | 0.5 | 63 | 68 | 40—90 | 34 | 129 |
| | 2 | 0.005 | 0.003 | 0.001 | 1.25 | 54 | 50 | 30—80 | 39 | 128 |
| | 3 | 0.005 | 0.002 | 0.005 | 0.71 | 60 | 53 | 25—80 | 38 | 128 |
| | 4 | 0.005 | 0.005 | 0.005 | 0.5 | 67 | 49 | 25—75 | 40 | 130 |
| | 5 | 0.01 | 0.0025 | 0.0025 | 2 | 44 | 47 | 30—70 | 41 | 127 |
| | 6 | 0.01 | 0.005 | 0.005 | 1 | 69 | 43 | 25—60 | 37 | 130 |
| | 7 | 0.01 | 0.01 | 0.01 | 0.5 | 72 | 41 | 30—55 | 40 | 133 |
| Comparative sample | 8 | 0.01 | — | — | — | 31 | 28 | 15—40 | 45 | 120 |
| | 9 | 0.05 | 0.1 | 0.1 | 0.25 | 65 | 80 | 20—130 | 21 | 128 |

0 040 499

The grain size in the above table was determined by measuring the long axial diameter by microscopic observation of the surface of the sintered body. When the cross-section of the sintered body was observed, the crystal grain size on the surface of the sintered body was substantially the same as the crystal grain size in the inner portion. The bending strength was an average value of ten samples of the four point bending strength measured under the condition of an outer span of 30 mm and an inner span of 10 mm with respect to a sample of 4×3×40 mm.

As seen from the above table, all the samples according to the present invention have an in-line transmission of more than 40%, and accordingly the lamp efficiency is excellent and the grain size is relatively uniform, so that the mechanical strength is high. On the other hand, in the comparative sample containing only MgO (Sample No. 8), the in-line transmission is only 31% and when this sample is used as an envelope for a lamp the lamp efficiency is poor, while in the Sample No. 9 wherein $La_2O_3$ and $Y_2O_3$ are contained in an amount of 0.1% respectively and the weight ratio of $MgO/La_2O_3+Y_2O_3$ is 0.25, the grain size is very uneven, so that the mechanical strength is very poor. When 10 400 W high pressure sodium lamps were produced by using the product of Sample No. 9, the occurrence of cracks was observed in one envelope upon sealing, while in the sample Nos. 1—7 and the comparative Sample No. 8 no occurrence of cracks was observed.

As seen from the above explanation, the polycrystalline translucent alumina sintered body according to the present invention contains $Y_2O_3$ and $La_2O_3$ as additives in addition to MgO, so that the firing can be carried out at a lower temperature and the contents of MgO, $La_2O_3$ and $Y_2O_3$ and the weight ratio of $MgO/La_2O_3+Y_2O_3$ are particularly defined, so that the second phase is not substantially formed in the crystal grain boundaries and therefore the in-line transmission is excellent and the alumina crystal grain size is uniform, so that the mechanical strength is high. As a result, when a polycrystalline alumina sintered body according to the present invention is used as an envelope for a high pressure vapour discharge lamp, such as a high pressure sodium lamp, the lamp efficiency is high and the envelope can endure a large thermal shock when sealing the lamp or switching on and off.

## Claims

1. A polycrystalline translucent alumina sintered body which contains MgO, $La_2O_3$ and $Y_2O_3$, characterized in that the content of each of MgO, $La_2O_3$ and $Y_2O_3$ is 0.001—0.05% by weight in that the weight ratio of $MgO/La_2O_3+Y_2O_3$ is 0.5:1 to 2:1, and in that the inline transmission is more than 40%, wherein the inline transmission is measured on a polished sample having a cross-sectional area of 10×10 mm and a thickness of 0.5 mm at a wavelength of 600 nm.

2. A high pressure vapour discharge lamp having an envelope of polycrystalline translucent alumina which contains MgO, $La_2O_3$ and $Y_2O_3$, characterized in that the content of each of MgO, $La_2O_3$ and $Y_2O_3$ is 0.001—0.05% by weight, in that the weight ratio of $MgO/La_2O_3+Y_2O_3$ is 0.5:1 to 2:1, and in that the in-line transmission is more than 40%, wherein the in-line transmission is measured on a polished sample having a cross-sectional area of 10×10 mm and a thickness of 0.5 mm at a wavelength of 600 nm.

3. A method of producing a polycrystalline translucent alumina sintered body, characterized by comprising adding to alumina powder having a purity of more than 99.8% MgO or a compound forming MgO in an amount of 0.01—0.1% by weight calculated as MgO, $La_2O_3$ or a compound forming $La_2O_3$ in an amount of 0.001—0.05% by weight calculated as $La_2O_3$, and $Y_2O_3$ or a compound forming $Y_2O_3$ in an amount of 0.001—0.05% by weight calculated as $Y_2O_3$, thoroughly mixing the resulting mixture, shaping the mixture into a desired form and firing the shaped article under vacuum or either an atmosphere of hydrogen gas or dissociated ammonia gas under an oxygen concentration of $10^{-15}$—$10^{-25}$ atm. ($10^{-10}$—$10^{-20}$ Pa).

## Patentansprüche

1. Polykristalliner lichtdurchlässiger Aluminiumoxid-Sinterkörper mit einem Gehalt an MgO, $La_2O_3$ und $Y_2O_3$, dadurch gekennzeichnet, dass der Gehalt an jeweils MgO, $La_2O_3$ und $Y_2O_3$ 0,001 bis 0,05 Gew.% beträgt, dass das Gewichtsverhältnis von $MgO/La_2O_3+Y_2O_3$ 0,5:1 bis 2:1 beträgt und dass die In-line-Durchlässigkeit mehr als 40% beträgt, wobei die In-line-Durchlässigkeit an einer polierten Probe mit einer Querschnittsfläche von 10×10 mm und einer Dicke von 0,5 mm bei einer Wellenlänge von 600 nm gemessen wird.

2. Hochdruck-Vakuum-Entladungslampe mit einer Hülle aus polykristallinem lichtdurchlässigen Aluminiumoxid, welches MgO, $La_2O_3$ und $Y_2O_3$ enthält, dadurch gekennzeichnet, dass der Gehalt an jeweils MgO, $La_2O_3$ und $Y_2O_3$, 0,001 bis 0,05 Gew.% beträgt, dass das Gewichtsverhältnis von $MgO/La_2O_3+Y_2O_3$ 0,5:1 bis 2:1 beträgt und dass die In-line-Durchlässigkeit mehr als 40 % beträgt, wobei die In-line-Durchlässigkeit an einer polierten Probe mit einer Querschnittsfläche von 10×10 mm und einer Dicke von 0,5 mm bei einer Wellenlänge von 600 nm gemessen wird.

3. Verfahren zur Herstellung eines polykristallinen lichtdurchlässigen Aluminiumoxid-Sinterkörpers, dadurch gekennzeichnet, dass man zu Aluminiumoxidpulver mit einer Reinheit von mehr als 99,8 % MgO oder eine Verbindung, die MgO ergibt, in einer Menge von 0,01 bis 0,1 Gew.%, berechnet als MgO, $La_2O_3$ oder eine Verbindung, die $La_2O_3$ ergibt, in einer Menge von 0,001 bis 0,05 Gew.%, berechnet als $La_2O_3$, und $Y_2O_3$ oder eine Verbindung, die $Y_2O_3$ ergibt, in einer Menge von 0,001 bis 0,05 Gew.%, berechnet als $Y_2O_3$, zugibt, dass man die erhaltene Mischung gründlich mischt, dass man die Mischung zu der gewünschten Form ausbildet und den Formkörper unter Vakuum oder entweder einer Atmosphäre aus Wasserstoffgas oder dissoziiertem Ammoniakgas unter einer Sauerstoffkonzentration von $10^{-15}$ bis $10^{-25}$ ($10^{-10}$ bis $10^{-20}$ Pa) brennt.

**Revendications**

1. Corps fritté en alumine polycristalline translucide, contenant du MgO, du $La_2O_3$ et de l'$Y_2O_3$, caractérisé en ce que la teneur respective en MgO, $La_2O_3$ et $Y_2O_3$ ets de 0,001—0,05 % en poids, en ce que le rapport pondéral MgO / $La_2O_3+Y_2O_3$ est de 0,5:1—2:1, et en ce que la transmission en ligne est supérieure à 40 %, la transmission ligne ligne étant mesurée avec une longueur d'onde de 600 nm sur un échantillon poli ayant une section droite de 10×10 mm et une épasseur de 0,5 mm.

2. Lampe à décharge à haute pression de vapeur comportant une enveloppe en alumine polycristalline translucide contenant du MgO, du $la_2O_3$ et de l'$Y_2O_3$, caractérisée en ce que la teneur respective en MgO, en $La_2O_3$ et en $Y_2O_3$ est de 0,001—0,05 % en poids, en ce que le rapport pondéral MgO/$La_2O_3+Y_2O_3$ est de 0,5:1—2:1, et en ce que la transmission en ligne est supérieure à 40 %, la transmission en ligne étant mesurée avec une longueur d'onde de 600 nm sur un échantillon poli ayant une section droite de 10×10 mm et un épaisseur de 0,5 mm.

3. Procédé pour produire un corps fritté en alumine polycristalline translucide, caractérisé en ce qu'il comprend une addition à une poudre d'alumine ayant une pureté supérieure à 99,8 % de MgO ou d'un précurseur de MgO, selon une proportion de 0,01—0,1 % en poids calculée sous forme de MgO, de $La_2O_3$ ou d'un précurseur de $La_2O_3$, selon une proportion de 0,001—0,05 % en poids calculée sous forme de $La_2O_3$, et de $Y_2O_3$ ou d'un précurseur de $Y_2O_3$, selon une proportion de 0,001—0,05 % en poids calculée sous forme de $Y_2O_3$, un mélangeage poussé du mélange résultant, un façonnage du mélange dans une forme voulue, et une cuisson de l'article façonné sous vide ou dans une atmosphère de gaz hydrogène ou de gaz ammoniac dissocié sous une concentration en oxygène de $10^{-15}$—$10^{-25}$ atm ($10^{-10}$—$10^{-20}$ Pa.)